# EUROPÄISCHE PATENTSCHRIFT

(11) **EP 3 275 849 B1**
(45) Veröffentlichungstag und Bekanntmachung des Hinweises auf die Patenterteilung: **08.04.2020**
(21) Anmeldenummer: 16400031.7
(22) Anmeldetag: 26.07.2016
(51) Int. Cl.: C04B 35/117, B01J 8/06, C04B 35/63, C04B 35/80, C04B 28/00, C04B 111/28

(54) **DIE VERWENDUNG EINES ISOLIERFORMKÖRPERS IN EINEM ROHRREAKTOR**
USE OF AN INSULATION FORM BODY IN A TUBE REACTOR
L'UTILISATION D'UN CORPS DE MOULE ISOLANT DANS UN REACTEUR TUBULAIRE

(43) Veröffentlichungstag der Anmeldung: 31.01.2018
(73) Patentinhaber: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Erfinder: Coscia, Antonio, D-65589 Hadamar (DE); Scholz, Hans-Werner, D-61231 Bad Nauheim (DE)
(74) Vertreter: Dropsch, Holger

(56) Entgegenhaltungen:
- EP-A2- 0 936 199
- DE-T2- 60 207 912
- US-A1- 2002 121 309
- US-A1- 2004 033 882
- US-A1- 2009 257 925
- US-A1- 2012 269 993
- US-B1- 8 894 919

## Beschreibung

### Gebiet der Erfindung

Die Erfindung betrifft die Verwendung von selbsttragenden Isolierformkörpern aus einem SiO₂-Fasern und Al₂O₃-Fasern enthaltenden keramischen Material. Die Erfindung betrifft die Verwendung als Isolationsmaterial in den Spaltrohrleitungen eines Rohrreaktors zur Durchführung eines Dampfreformierungsverfahrens.

### Stand der Technik

Selbsttragende, aus einer SiO₂-Fasern und Al₂O₃-Fasern enthaltenden Keramik bestehende Isolierformkörper sind bekannt. Sie werden häufig in den Spaltrohrleitungen eines Rohrreaktors zur Durchführung eines Dampfreformierungsverfahrens eingesetzt.

Derartige Dampfreformierungsverfahren und die dabei eingesetzten Rohrreaktoren dienen zur Umwandlung von gasförmigen Kohlenwasserstoffen mit Dampf in hauptsächlich aus Kohlenmonoxid und Wasserstoff bestehendes Synthesegas. Sie sind an sich bekannt und grundsätzlich, z. B. in Ullmann's Encyclopedia of Industrial Chemistry, Sixth Ed., Vol. 15, Kapitel "Gas Production", Kap. 2.2 beschrieben. Diese Rohrreaktoren bestehen im Wesentlichen aus einem Heizraum durch den zahlreiche sogenannte Spaltrohre senkrecht hindurchgeführt und beheizt werden. Die Spaltrohre sind mit einem für die Reformierungsreaktionen aktiven Katalysator als Festbett gefüllt. Die Prozessgase, d.h. die Edukt- und Produktgase des Dampfreformierungsverfahrens werden durch die Spaltrohre hindurchgeführt. Die Enden der Spaltrohre ragen beispielsweise oben und unten aus dem Heizraum des Rohrreaktors heraus und sind häufig mit einer Isolierung versehen, um Wärmeverlusten und Verbrennungen des Bedienpersonals vorzubeugen.

Als Isoliermaterialien werden häufig SiO₂- und Al₂O₃-basierte Fasermaterialien eingesetzt, die als Bänder oder Matten vorliegen, so dass sich das Anbringen und die Demontage der Isolierung aufwendig gestaltet. Günstiger wäre es, formstabile Isolierformkörper zu verwenden, deren Ein- und Ausbau sich einfacher gestaltet, die eine ausreichende Standzeit aufweisen und die gegebenenfalls mehrfach verwendet werden können. Solche Isolierformkörper sollen vor allem auch bei einer im Inneren des Spaltrohrs, also als innenliegende Isolierung eingesetzt werden, um die innere Oberfläche der Anlagenteile vor Temperaturen zu schützten, die die sogenannte Metal-Dusting-Korrosion fördern.

Im Zusammenhang mit einer ausreichenden Standzeit spielt die Verwendung des Bindemittels eine wichtige Rolle. Es hat sich in der Praxis gezeigt, dass unter Verwendung eines SiO₂-haltigen und/oder eines organischen Binders die so gefertigten Isolierkörper unter den Prozessbedingungen der Dampfreformierung nur ungenügende Standzeiten erreichen. infolge der hohen Prozesstemperaturen, denen die Isolierung ausgesetzt sind und dem hohen Dampfgehalt im Prozessgas, werden diese bisher verwendeten Binder aus dem keramischen Material ausgetrieben, wodurch es seine Stabilität verliert und zerfällt.

In der Patentschrift US 8,986,598 B2 wird ein Verfahren zur Herstellung eines Formkörpers aus einem feuerfesten Spinell-SiC-Verbundwerkstoff beschrieben. Bei diesem Verfahren wird ein Al₂O₃-Sol als Bindemittel verwendet. Die beteiligten Komponenten sind als Isoliermittel für die Dampfreformierung unüblich.

In der Patentveröffentlichung DE 602 22 841 T2 wird die Herstellung eines geformten Keramikmatrixverbundteils beschrieben, wobei die Matrix aus einer kolloidalen Suspension eines Metalloxids, z.B. Aluminiumoxid, besteht, in die Aluminiumoxidteilchen eingemischt werden. Flüchtige Komponenten werden dann unter Anlegen eines Vakuums und Brennen bei Temperaturen zwischen 815 und 1260 °C entfernt.

In beiden Veröffentlichungen wird auf die Verwendung bewährter Fasermaterialien auf SiO₂- und Al₂O₃-Basis und ihre Verwendung zur Herstellung selbsttragender, langzeitstabiler Isolierformkörper zur Verwendung in Dampfreformierungsanlagen nicht eingegangen.

Es bestand daher die Aufgabe, ein Isoliermaterial bzw. Isolierformkörper für den Dampfreformierungsprozess zur Verfügung zu stellen, die eine längere Standzeit erreichen und gängige Bestandteile enthalten. DE60207912 zeigt, dass es bekannt ist, keramische Isolationsmatten beim Dampfreformierungsverfahren zu benützen. Al₂O₃-Faser und Al₂O₃-Bindemittel werden erwähnt, obwohl nicht zusammen.

### Beschreibung der Erfindung

Die Aufgabe wurde durch die Verwendung selbsttragender Isolierformkörper aus einem SiO₂-Fasern und Al₂O₃-Fasern enthaltenden keramischen Material als Isolationsmaterial in Spaltrohren eines Rohrreaktors zur Durchführung eines Dampfreformierungsverfahrens zur Erzeugung von Synthesegas gemäß Anspruch 1 gelöst.

Dabei wurde den oben erwähnten Patentschriften US 8,986,598 B2 und DE 602 22 841 T2 die Anregung entnommen, als Binder für die Herstellung selbsttragender Isolierformkörper aus einem SiO₂-Fasern und Al₂O₃-Fasern enthaltenden keramischen Material ein Al₂O₃-Sol zu verwenden. Durch die Verwendung dieses Binders konnte die Standzeit der Formteile, die für die innenliegende Isolierung der Spaltrohre verwendet werden, verbessert werden.

Die Herstellung der Isolierformkörper kann effektiver gestaltet werden, indem Verfahrensschritte unter Vakuumbedingungen durchgeführt werden.

### Bevorzugte Ausgestaltungen der Erfindung

Eine bevorzugte Ausgestaltung der Erfindung ist dadurch gekennzeichnet, dass die Isolierformkörper mit einem kreisbogenförmigen Profil, bevorzugt in Form einer Halbschale oder Viertelschale, oder in Zylinderform ausgestattet sind. Hierdurch wird die Einführung und Platzierung der Körper an der für die Isolierung vorgesehenen Stellen in den Spaltrohren ermöglicht bzw. erleichtert.

Eine weitere bevorzugte Ausgestaltung der Verwendung der lsolietformkörper ist dadurch gekennzeichnet, dass der Einlass für die Edukte und der Auslass für die Produkte an entgegengesetzten und aus dem Heizraum des Rohrreaktors herausragenden Enden des Spaltrohres angeordnet sind, wobei der Einlassbereich und/oder der Auslassbereich des Spaltrohres mit innenliegenden Isolierformkörpem ausgerüstet sind, die ein kreisbogenförmiges Profil aufweisen. Diese Ausgestaltung hat den Vorteil, dass die Enden der Spaltrohre, dadurch dass sie aus dem Heizraum herausragen, gut zugänglich sind. Zum Schutz des Wartungspersonals gegen Verbrennungen und zur Vermeidung unnötiger Wärmeverluste, ist aber auch eine besonders gute Isolierung dieser Rohrenden erforderlich und wird durch die Verwendung der Isolierformkörper gewährleistet.

Eine weitere bevorzugte Ausgestaltung der Verwendung der Isolierformkörper ist dadurch gekennzeichnet, dass der Einlass für die Edukte und der Auslass für die Produkte an demselben, aus dem Heizraum des Rohrreaktors herausragenden Ende des Spaltrohres angeordnet sind und dass am entgegengesetzten Ende des Spaltrohres ein freier Innenraum vorhanden ist, der zur Umlenkung der das Katalysatorbett verlassenden Gasströmung in ein im Inneren des Katalysatorbetts angeordnetes Wärmetauscherrohr dient, wobei der Einlassbereich und/oder der Auslassbereich des Spaltrohres mit innenliegenden Isolierformkörpern ausgerüstet sind, die ein kreisbogenförmiges Profil aufweisen und der freie Innenraum mit einem innenliegenden Isolierformkörper ausgerüstet ist, der Zylinderform aufweist. Auch diese Ausgestaltung hat den Vorteil, dass die Enden der Spaltrohre, dadurch dass sie aus dem Heizraum herausragen, gut zugänglich sind. Sie müssen ebenso, zum Schutz des Wartungspersonals gegen Verbrennungen und zur Vermeidung unnötiger Wärmeverluste, gut isoliert werden, was durch die Verwendung der Isolierformkörper gewährleistet werden kann.

### Ausführungsbeispiele

Weitere Merkmale, Vorteile und Anwendungsmöglichkeiten der Erfindung ergeben sich auch aus der nachfolgenden Beschreibung von Ausführungs- und Zahlenbeispielen und der Zeichnungen.

Anhand der Zeichnung soll die Erfindung näher erläutert werden. Es zeigen
- Fig. 1: einen Querschnitt des oberen, durch die Decke des Heizraums eines Rohrreaktors geführten Endes eines Spaltrohrs,
- Fig. 2: einen Querschnitt des unteren, durch den Boden des Heizraums eines Rohrreaktors geführten Endes eines Spaltrohrs,
- Fig. 3: einen Querschnitt eines Spaltrohrs mit internem Wärmetauscher.

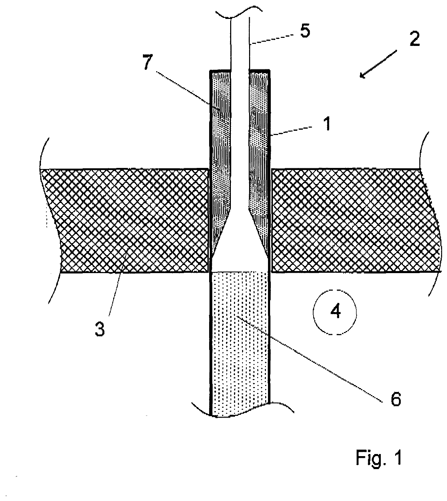

In Fig. 1 ragt das obere Ende 1 eines Spaltrohrs 2 durch die Decke 3 des Heizraums 4. Das Spaltrohr 2 ist nicht fest mit der Decke 3 verbunden, damit die Wärmedehnung des Spaltrohrs 2 ausgeglichen werden kann, indem es aus der Decke 3 herauswächst. Über ein dünnwandiges, flexibles Rohr 5 ist das obere Ende 1 des Spaltrohrs 2 mit einem nicht dargestellten Verteilerrohr verbunden, aus dem das Eduktgas in das Spaltrohr 2 eingeleitet wird. Das Eduktgas wird durch das Katalysatorfestbett 6 durch das Spaltrohr 2 zu dessen untern, nicht dargestellten Ende hin, geleitet. Das obere Ende 1 des Spaltrohrs 2 ist mit der innenliegenden Isolierformkörper 7, der aus dem erfindungsgemäßen, keramischen Material besteht, ausgestattet.

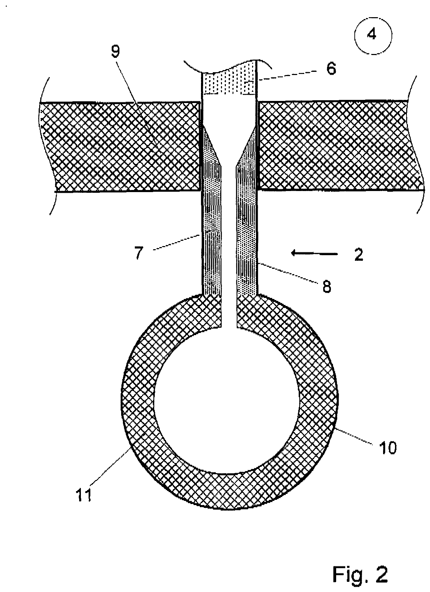

In Fig. 2 ist beispielhaft dargestellt, wie das untere Ende 8 eines Spaltrohrs 2 durch den Boden 9 eines Heizraums 4 geführt wird. Das Produktgas tritt aus dem Katalysatorbett 6 aus und wird in die Sammelleitung 10 eingeleitet. Die Sammelleitung 10 ist mit einer innenliegenden Isolierung 11 ausgestattet. Das untere Ende 8 des Spaltrohrs 2 ist mit der innenliegenden Isolierformkörper 7, die aus dem erfindungsgemäßen, keramischen Material besteht, ausgestattet.

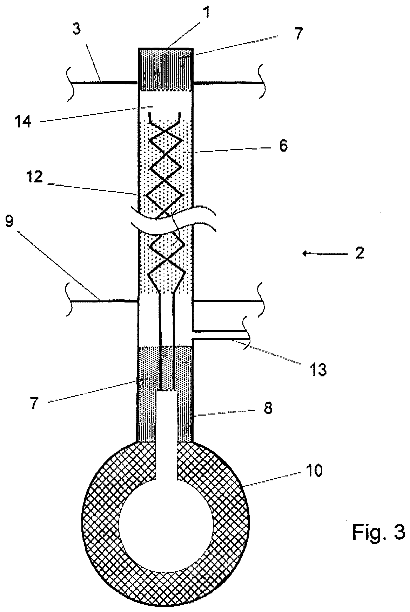

Fig. 3 zeigt, wie ein Spaltrohr 2 mit innenliegendem Wärmetauscher 12 mit dem oberen Ende 1 aus der Decke 3 des Heizraums 4 und mit dem unteren Ende 8 aus dem Boden 9 des Heizraums 4 herausragt. Außerdem ist die Zuführung für das Eduktgas 13 dargestellt, durch die das Gas in das Spaltrohr 2 eingeleitet wird. Das Gas steigt dann durch das Katalysatorfestbett 6 im Spaltrohr 2 bis in den Umkehrraum 14 auf und fließt von dort durch die Wärmetauscherrohre 12 bis in die Sammelleitung 10 für das Produktgas. Das obere 1 und das untere Ende 8 des Spaltrohrs 2 ist mit der innenliegenden Isolierformkörper 7, der aus dem erfindungsgemäßen, keramischen Material besteht, ausgestattet.

### Gewerbliche Anwendbarkeit

Die Erfindung ermöglicht das Erreichen höherer Standzeiten der Spaltrohre und damit zu einer verbesserten Wirtschaftlichkeit des Dampfreformierungsprozesses. Daher ist die Erfindung vorteilhaft wirtschaftlich anwendbar.

### Bezugszeichenliste

- 1: oberes Ende eines Spaltrohrs
- 2: Spaltrohr
- 3: Decke eines Heizraums eines Rohrreaktors
- 4: Heizraum eines Rohrreaktors
- 5: Flexibles Rohr
- 6: Katalysatorfestbett
- 7: Isolierformkörper
- 8: Unteres Ende eines Spaltrohrs
- 9: Boden eines Heizraums eines Rohrreaktors
- 10: Sammelleitung für Produktgas
- 11: Isolierung der Sammelleitung
- 12: Wärmetauscherrohre
- 13: Zuführung für Eduktgas
- 14: Umkehrraum für Gasfluss innerhalb des Spaltrohrs

## Patentansprüche

1. Verwendung eines selbsttragenden Isolierformkörpers aus einem SiO₂-Fasern und Al₂O₃-Fasern enthaltenden keramischen Material, erhalten durch ein Verfahren, das die folgende Schritte umfasst:
(a) Bereitstellen einer fließfähigen Mischung, enthaltend SiO₂-Fasern und Al₂O₃-Fasern sowie ein Al₂O₃-Sol als Binder,
(b) Herstellen eines Rohlings durch Einfüllen, insbesondere Gießen oder Verpressen der unter (a) erhaltenen Mischung in eine Hohlform,
(c) Brennen des in Schritt (b) erhaltenen Rohlings bei einer Temperatur von mindestens 800 °C.
als innenliegendes Isolationsmaterial in Spaltrohren eines Rohrreaktors zur Durchführung eines Dampfreformierungsverfahrens zur Erzeugung von Synthesegas.

2. Verwendung nach Anspruch 1, **dadurch gekennzeichnet, dass** der Einlass für die Edukte und der Auslass für die Produkte an entgegengesetzten und aus dem Heizraum des Rohrreaktors herausragenden Enden des Spaltrohres angeordnet sind, wobei der Einlassbereich und/oder der Auslassbereich des Spaltrohres mit innenliegenden Isolierformkörpern ausgerüstet sind, die ein kreisbogenförmiges Profil aufweisen.

3. Verwendung nach Anspruch 1, **dadurch gekennzeichnet, dass** der Einlass für die Edukte und der Auslass für die Produkte an demselben, aus dem Heizraum des Rohrreaktors herausragenden Ende des Spaltrohres angeordnet sind und dass am entgegengesetzten Ende des Spaltrohres ein freier Innenraum vorhanden ist, der zur Umlenkung der das Katalysatorbett verlassenden Gasströmung in ein im Inneren des Katalysatorbetts angeordnetes Wärmetauscherrohr dient, wobei der Einlassbereich und/oder der Auslassbereich des Spaltrohres mit innenliegenden Isolierformkörpern ausgerüstet sind, die ein kreisbogenförmiges Profil aufweisen und der freie Innenraum mit einem innenliegenden lsolierformkörper ausgerüstet ist, der Zylinderform aufweist.

4. Verwendung nach einem der vorigen Ansprüche, **dadurch gekennzeichnet, dass** der Isolierformkörper ein kreisbogenföriges Profil, bevorzugt in Form einer Halbschale oder Viertelschale, oder Zylinderform aufweist.

## Claims

1. Use of a self-supporting moulded insulation body which is made from a ceramic material containing SiO₂ fibres and Al₂O₃ fibres and is obtained by a process comprising the following steps:
a) providing a flowable mixture containing SiO₂ fibres and Al₂O₃ fibres and also an Al₂O₃ sol as a binder,
b) producing a preform by filling, in particular pouring or pressing, the mixture obtained in (a) into a hollow mould,
c) kilning the preform obtained in step (b) at a temperature of at least 800°C
as internal insulation material in cracking tubes of a tubular reactor for performing a steam reforming process for generating synthesis gas.

2. Use according to claim 1, **characterised in that** the inlet for the reactants and the outlet for the products are arranged at opposite ends of the cracking tube which project out of the heating space of the tubular reactor, wherein the inlet region and/or the outlet region of the cracking tube are fitted with internal moulded insulation bodies having a circular arc profile.

3. Use according to claim 1, **characterised in that** the inlet for the reactants and the outlet for the products are arranged at the same end of the cracking tube which projects out of the heating space of the tubular reactor, and **in that**, at the opposite end of the cracking tube, a free interior space is present which serves to deflect the gas flow leaving the catalyst bed into a heat exchanger tube arranged inside the catalyst bed, wherein the inlet region and/or the outlet region of the cracking tube are fitted with internal moulded insulation bodies having a circular arc profile and the free interior space is fitted with an internal moulded insulation body which is cylindrical.

4. Use according to any one of the preceding claims, **characterised in that** the moulded insulation body has a circular arc profile, preferably in the shape of a half shell or quarter shell, or is cylindrical.

## Revendications

1. Utilisation d'un corps moulé isolant autoporteur fabriqué à partir d'un matériau céramique contenant des fibres de SiO₂ et des fibres d'Al₂O₃, obtenu par un procédé, qui comprend les étapes suivantes consistant à :
(a) fournir un mélange fluide, contenant des fibres de SiO₂ et des fibres d'Al₂O₃, ainsi qu'une sol. d'Al₂O₃ en tant que liant,
(b) préparer une ébauche par remplissage, en particulier coulage ou compression du mélange obtenu à l'étape (a) dans un moule creux,
(c) brûler l'ébauche obtenue à l'étape (b) à une température d'au moins 800 °C
en tant que matériau d'isolation intérieur dans des gaines d'un réacteur tubulaire pour la réalisation d'un procédé de reformage à la vapeur destiné à la production de gaz de synthèse.

2. Utilisation selon la revendication 1, **caractérisée en ce que** l'entrée des éduits et la sortie des produits sont disposés au niveau des extrémités opposées de la gaine qui font saillie de la chambre de chauffage du réacteur tubulaire, la zone d'entrée et/ou la zone de sortie de la gaine étant équipée(s) de corps moulés isolants intérieurs, qui présentent un profil en arc de cercle.

3. Utilisation selon la revendication 1, **caractérisée en ce que** l'entrée des éduits et la sortie des produits sont disposées aux mêmes extrémités de la gaine qui font saillie de la chambre de chauffage du réacteur tubulaire et **en ce qu'**au niveau des extrémités opposées de la gaine il existe un espace intérieur libre, qui sert de déviation à l'écoulement gazeux sortant du lit catalytique dans un tube échangeur de chaleur disposé à l'intérieur du lit catalytique, la zone d'entrée et/ou la zone de sortie de la gaine étant équipée(s) de corps moulés isolants intérieurs, qui présentent un profil en arc de cercle et l'espace intérieur libre étant équipé d'un corps moulé isolant intérieur, qui présente une forme cylindrique.

4. Utilisation selon l'une quelconque des revendications précédentes, **caractérisée en ce que** le corps moulé isolant présente un profil en arc de cercle, de préférence sous forme d'une demi-coquille ou d'un quart de coquille, ou de forme cylindrique.
